# EUROPÄISCHE PATENTSCHRIFT

(11) **EP 3 441 289 B1**
(45) Veröffentlichungstag und Bekanntmachung des Hinweises auf die Patenterteilung: **09.09.2020**
(21) Anmeldenummer: 18187645.9
(22) Anmeldetag: 07.08.2018
(51) Int. Cl.: B62D 15/02, B60W 30/12, B60W 30/18

(54) **FAHRERUNTERSTÜTZUNG BEIM FOLGEN EINER SOLL-FAHRTRAJEKTORIE EINES KRAFTFAHRZEUGS**
DRIVER SUPPORT WHEN FOLLOWING A TARGET DRIVING TRAJECTORY OF A MOTOR VEHICLE
AIDE À LA CONDUITE LORS DE LA SUIVIE D'UNE TRAJECTOIRE DE CONDUITE DE CONSIGNE D'UN VÉHICULE AUTOMOBILE

(30) Priorität: 11.08.2017 DE 102017118400
(43) Veröffentlichungstag der Anmeldung: 13.02.2019
(73) Patentinhaber: Valeo Schalter und Sensoren GmbH, 74321 Bietigheim-Bissingen (DE)
(72) Erfinder: Hettmann, Hanne, 74321 Bietigheim-Bissingen (DE); Honer, Jens, 74321 Bietigheim-Bissingen (DE)
(74) Vertreter: Withopf, Kristina

(56) Entgegenhaltungen:
- EP-A1- 2 711 908
- DE-A1-102010 049 586
- DE-T2-602005 004 242

## Beschreibung

Die Erfindung betrifft ein Verfahren zum Betreiben einer Fahrerassistenzvorrichtung eines Kraftfahrzeugs. Die Erfindung betrifft auch eine Fahrerassistenzvorrichtung für ein Kraftfahrzeug, mit einer Umgebungssensoreinrichtung zum Erfassen einer Umgebung des Kraftfahrzeugs und zum Bereitstellen einer Umgebungsinformation, welche die erfasste Umgebung repräsentiert, und mit einer fahrzeuginternen Sensoreinrichtung zum Erfassen eines Verhaltens eines Fahrers des Kraftfahrzeugs und zum Bereitstellen einer Verhaltensinformation, welche das Verhalten des Fahrers repräsentiert.

Fortgeschrittene Fahrerassistenzsysteme im Kraftfahrzeug basieren auf dem Überwachen multimodaler Sensordaten über eine Umgebung des Kraftfahrzeugs sowie auf einem fahrzeuginternen Zustand. Indem diese Fahrerassistenzvorrichtungen entsprechende Daten einer Umgebungssensoreinrichtung und einer fahrzeuginternen Sensorvorrichtung analysieren, sind sie dazu in der Lage, eine Bewegung des Kraftfahrzeugs vorherzusagen und die Umgebung des Kraftfahrzeugs einzuschätzen. Die Auswertung der gewonnenen Informationen befähigt die Fahrerassistenzvorrichtungen dazu, einen Fahrer des Kraftfahrzeugs bei dem Führen des Kraftfahrzeugs, insbesondere bei dem Durchführen von Fahrmanövern, zu unterstützen, und ihn auf mögliche Gefahren hinzuweisen oder automatisch spezifische Manöver durchzuführen, um diesen Gefahren zu entgehen.

Ein Beispiel für derartige Fahrerassistenzvorrichtungen ist ein Spurhalteassistent. Dabei werden bekanntermaßen Spurmarkierungen in der Umgebung des Kraftfahrzeugs über geeignete Sensoren erfasst. Stellt die Fahrerassistenzvorrichtung ein bevorstehendes Überqueren einer Spurmarkierung fest, so kann sie automatisch in den Lenkvorgang eingreifen und einer Lenkeingabe des Fahrers mit einer (geringen) Gegenkraft entgegenwirken. Dies hält den Fahrer von einem irrtümlichen Verlassen der Fahrspur ab und erhöht seine Sicherheit.

Beispielsweise ist aus der US 2008/0091318 A1 ein Spurhalteassistent bekannt, welcher den Fahrer beim Fahren dahingehend unterstützt, dass das Fahrzeug mittig innerhalb einer Fahrspur geführt wird. Sobald der Fahrer von der mittigen Position abweicht, reagiert das System mit einem Lenkeingriff und versucht, das Fahrzeug wieder mittig zur Fahrspur auszurichten. Dies wird von einigen Fahrern insbesondere beim Spurwechsel jedoch als störend empfunden.

In der WO 2014/029599 A1 wird in diesem Zusammenhang ein Verfahren zum Führen eines Fahrzeugs innerhalb eines Fahrstreifens beschrieben. Hierbei wird der Fahrer beim Fahren innerhalb eines Fahrstreifens unterstützt, ohne dass das System gegen die Lenkeingabe des Fahrers arbeitet. Vielmehr wird eine vorgegebene Soll-Trajektorie des Fahrers innerhalb der Fahrspur bestimmt und das System greift nur korrigierend ein, um die Soll-Trajektorie zu halten.

Das Dokument DE602005004242T2, das als nächstliegender Stand der Technik angesehen wird, offenbart ein Verfahren und eine Vorrichtung gemäß dem Oberbegriff des Anspruchs 1 bzw. 8.

Der Erfindung liegt somit die Aufgabe zugrunde, eine Fahrerassistenzvorrichtung bereitzustellen, welche den Fahrer bei einem Halten einer Spur unterstützt und dennoch flexibel auf sich ändernde Situationen reagieren kann und somit den Fahrer nicht bei einem gewünschten Manöver behindert.

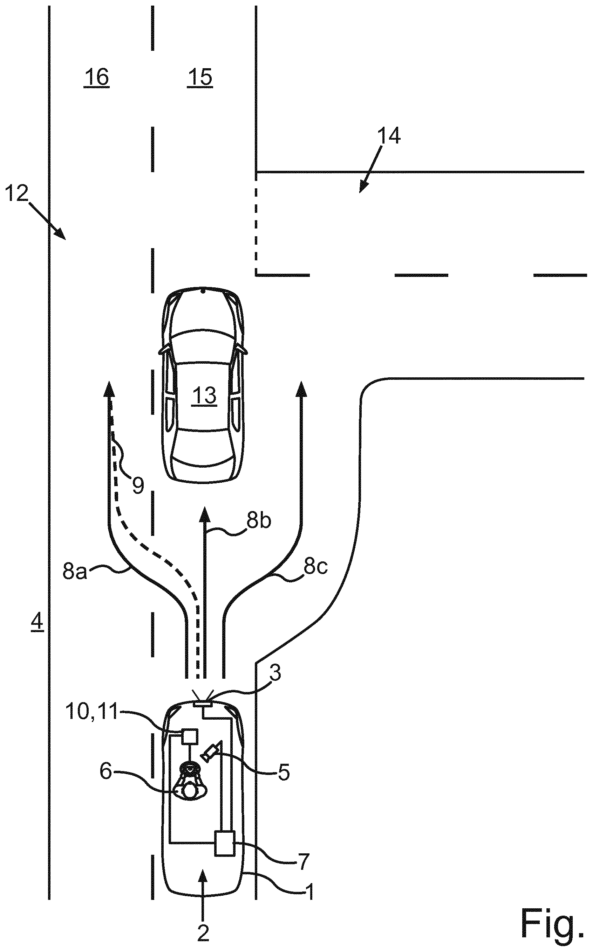

Diese Aufgabe wird durch die Gegenstände der unabhängigen Patentansprüche gelöst. Vorteilhafte Ausführungsformen ergeben sich aus den abhängigen Patentansprüchen, der Beschreibung und der Figur.

Die Erfindung betrifft ein Verfahren zum Betreiben einer Fahrerassistenzvorrichtung eines Kraftfahrzeugs, insbesondere einer Spurhalteassistenzvorrichtung eines Kraftfahrzeugs, mit einer Reihe von Verfahrensschritten. Ein Verfahrensschritt ist dabei ein Erfassen einer Umgebung des Kraftfahrzeugs durch eine Umgebungssensoreinrichtung der Fahrerassistenzvorrichtung. Ein weiterer Verfahrensschritt ist ein Bereitstellen einer Umgebungsinformation, welche die erfasste Umgebung repräsentiert, an eine Recheneinrichtung der Fahrerassistenzvorrichtung durch die Umgebungssensoreinrichtung. Als nächster Verfahrensschritt folgt hier ein Identifizieren zumindest eines möglichen Fahrmanövers, das heißt eines oder mehrerer möglicher Fahrmanöver, für das Kraftfahrzeug in der vorliegenden Fahrsituation anhand der Umgebungsinformation durch die Recheneinrichtung, wobei das oder die identifizierten Fahrmanöver aus einer Gruppe von Fahrmanöver ausgewählt werden, welche ein Spurhalte-Manöver und/oder ein Überhol-Manöver und/oder ein Spurwechsel-Manöver und/oder ein Ausweich-Manöver umfasst.

Insbesondere umfasst ein Fahrmanöver also eine Reihe von Steuereingaben, welche dem Erreichen eines Ziels, beispielsweise einem Überholen eines anderen Kraftfahrzeugs oder einem Halten einer Spur, dienen. Dabei können die Einzelsteuereingaben auch für das gleiche Fahrmanöver unterschiedlich ausgeprägt sein, da beispielsweise ein Spurhalten durch eine große Vielzahl unterschiedlicher Steuereingaben erreicht werden kann. Dabei ist die Anzahl der Fahrmanöver üblicherweise sehr gering, also weniger als fünf, da die Umgebung und die jeweilige Fahrsituation die jeweiligen möglichen Optionen des Fahrers stark einschränken.

Ein weiterer Verfahrensschritt ist ein Erfassen eines Verhaltens eines Fahrers des Kraftfahrzeugs durch eine fahrzeuginterne Sensoreinrichtung, beispielsweise eine Kamera oder eine Blinker-Eingabe- oder -Betätigungseinrichtung. Darauf folgt als nächster Verfahrensschritt ein Bereitstellen einer entsprechenden Verhaltensinformation, welche das erfasste Verhalten des Fahrers repräsentiert, an die Recheneinrichtung durch die fahrzeuginterne Sensoreinrichtung. Ein darauffolgender Verfahrensschritt ist ein Erkennen, ob eines der identifizierten Fahrmanöver ein von dem Fahrer beabsichtigtes Fahrmanöver ist, das heißt ob eines der identifizierten Fahrmanöver einer Fahrintention des Fahrers entspricht, anhand der bereitgestellten Verhaltensinformation, also anhand einer Analyse der bereitgestellten Verhaltensinformation, durch die Recheneinrichtung.

Falls nun ein, insbesondere genau ein, identifiziertes Fahrmanöver ein beabsichtigtes Fahrmanöver ist, das heißt der Fahrintention des Fahrers entspricht, erfolgen weitere Verfahrensschritte. Ein solcher weiterer Verfahrensschritt ist dabei ein Berechnen einer Soll-Fahrtrajektorie des Kraftfahrzeugs, welche auch als optimale Fahrtrajektorie bezeichnet werden kann, für das beabsichtigte Fahrmanöver durch die Recheneinrichtung. Dies kann anhand beziehungsweise in Abhängigkeit der Umgebungsinformation sowie insbesondere weiterer Informationen wie beispielsweise einem Straßenverlauf, welcher aus einer Karteninformation abgeleitet wird, oder wie dem Lenkwinkel und/oder einer Gierrate und/oder weiterer Parameter des Kraftfahrzeugs abgeleitet werden. Es können hier auch für alle identifizierten Fahrmanöver derartige optimale Fahrtrajektorien oder Soll-Fahrtrajektorien bestimmt werden und sodann die Soll-Trajektorie des beabsichtigten Fahrmanövers ausgewählt werden.

Ein weiterer Verfahrensschritt ist dann ein Erfassen einer Lenkeingabe, welche hier im Sinne einer Lenkwinkeländerung verstanden werden kann, da die Einhaltung eines bereits eingestellten Lenkwinkels im Allgemeinen keine Eingabe des Fahrers erfordert, und ein Überprüfen, ob die Lenkeingabe verstärkt oder abgeschwächt werden muss, um das Kraftfahrzeug entlang der für das beabsichtigte Fahrmanöver berechneten Soll-Trajektorie zu führen. In Abhängigkeit eines Ergebnisses des Überprüfens erfolgt dann ein Verstärken oder Abschwächen der Lenkeingabe durch die Fahrerassistenzvorrichtung, wobei für eine berechnete Soll-Fahrtrajektorie das Erfassen der Lenkeingabe und das Verstärken oder Abschwächen der Lenkeingabe in Abhängigkeit des Ergebnisses des Überprüfens fortlaufend durchgeführt wird, beispielsweise durch eine Lenkeinrichtung der Fahrerassistenzvorrichtung. Wird also festgestellt, dass eine Lenkeingabe des Fahrers verstärkt werden muss, um das Kraftfahrzeug entlang der Soll-Fahrtrajektorie zu führen, so wird entsprechend die Lenkeingabe verstärkt. Ergibt das Überprüfen, dass die Lenkeingabe abgeschwächt werden muss, um das Kraftfahrzeug entlang der Soll-Fahrtrajektorie zu führen, erfolgt entsprechend das Abschwächen der Lenkeingabe des Fahrers durch die Fahrerassistenzvorrichtung. Ändert der Fahrer den Lenkwinkel nicht, nimmt entsprechend keine Lenkeingabe vor, so bleibt der Lenkwinkel entsprechend auch durch die Fahrerassistenzvorrichtung unverändert, da keine Lenkeingabe im Sinne einer Lenkwinkeländerung vorliegt, welche verstärkt oder abgeschwächt werden könnte.

Die Soll-Fahrtrajektorie wirkt also ähnlich der "magnetischen" Orientierungslinien in modernen Computer-Präsentationsapplikationen, bei welchen diese magnetischen Linien dem Benutzer dabei helfen, Grafikelemente auf einem Arbeitsblatt in genauer und einfacher Weise anzuordnen, indem die Positionierung der Grafikelemente unterstützt wird. Dabei wird das Grafikelement, sobald es sich einer der Orientierungslinien nähert oder einer Position nähert, welcher gemäß einer entsprechenden hinterlegten Vorgabe dieses Element sinnvollerweise angeordnet werden sollte, von dieser Position oder der Linie im Sinne eines Attraktors angezogen. Die Position oder Orientierungslinie wird dabei anhand einer Symmetrie oder einer relativen Anordnung zu anderen, beispielsweise gleichartigen, Grafikelementen in dem Arbeitsblatt bestimmt. Führt nun ein Benutzer das Grafikelement nahe zu der entsprechenden Position oder Linie heran, so wird das Heranführen verstärkt und das Grafikelement automatisch und genau auf der Linie beziehungsweise der Position angeordnet. Entsprechend wird ein Entfernen von dieser Position erschwert, indem ein Wegführen des Grafikelementes abgeschwächt wird.

Ähnliches ist auch aus dem Bereich der Zielassistenzsysteme im Konsolenspielbereich bekannt, welche entwickelt wurden, um eine mangelnde Präzision analoger Eingabegeräte im Vergleich zu den aus dem Computerbereich bekannten Mäusen zu kompensieren. Dabei wird ein Spieler von der Zielassistenzvorrichtung unterstützt, wenn die entsprechende Konsole annimmt, dass er auf ein spezifisches Ziel zielt, da er einen Cursor nah an dieses Ziel bewegt hat. Die Zielassistenzvorrichtung übernimmt dabei die Feinsteuerung beziehungsweise das Feinzielen auf das Ziel und hilft ihm, weiter auf das Ziel ausgerichtet zu bleiben.

Die Erfindung schlägt also ein Verfahren zur Unterstützung eines Fahrers beim Führen eines Kraftfahrzeugs vor, bei welchem das Fahrerassistenzsystem oder die Fahrerassistenzvorrichtung die Fahrintention des Fahrers bestimmt und den Fahrer bei dem Ausführen der Fahrintention unterstützt, indem die Eingaben des Fahrers, beispielsweise eine Lenkung und/oder Beschleunigung und/oder weitere Eingaben, optimiert, das heißt verstärkt oder abschwächt. Dabei wird eine optimale Soll-Fahrtrajektorie bestimmt, welche der Intention des Fahrers entspricht. Eingaben des Fahrers werden dabei zum Folgen dieser Soll-Fahrtrajektorie optimiert. Sollte der Fahrer also keine Eingabe tätigen oder keine Fahrintention eindeutig identifiziert werden, das heißt kein beabsichtigtes Fahrmanöver erkannt werden, so wird die Fahrerassistenzvorrichtung untätig bleiben und nicht eingreifen. Dabei kann der Grad des Verstärkens oder Abschwächens, welcher absolut oder relativ vorgegeben werden kann, kontinuierlich angepasst werden, um die Eingabe des Fahrers zum Führen des Kraftfahrzeugs entlang der Soll-Fahrtrajektorie zu verbessern. Das Verfahren, auch einzelne Verfahrensschritte, können dabei insbesondere wiederholt durchgeführt werden.

Das hat zunächst den Vorteil, dass die Fahrerassistenzvorrichtung von sich aus, also selbstständig ohne Aktion des Fahrers, keine Steuerfunktion übernimmt und daher ähnlich wie beispielsweise ein Bremskraftverstärker besonders sicher ist. Überdies wird der Fahrer so weniger leicht gestört, da das Fahrerassistenzsystem nur aktiv ist, wenn auch der Fahrer aktiv ist, sodass dieser weiterhin das Gefühl der vollständigen Kontrolle über das Kraftfahrzeug hat. Dabei stellt die Fahrerassistenzvorrichtung die von bekannten Spurhalteassistenten bekannte Funktionalität bereit, ist jedoch aufgrund der Identifikation des jeweils beabsichtigten Fahrmanövers des Fahrers besonders flexibel und kann dem Fahrer bei einer Vielzahl von unterschiedlichen Manövern in der beschriebenen unaufdringlichen Weise unterstützen ohne ihn zu behindern und so die Sicherheit im Straßenverkehr erhöhen. Da das System nicht eine Eingabe des Fahrers verstärkt oder abschwächt, wenn kein beabsichtigtes Fahrmanöver erkannt wurde, ist hier auch eine Fehleranfälligkeit und entsprechende fehlerhafte Konsequenzen reduziert. Die Fahrerassistenzvorrichtung entspricht so inhärent einem SAE-Level 2-System (teilweise Automation).

In einer vorteilhaften Ausführungsform ist dabei vorgesehen, dass das Verstärken oder Abschwächen, insbesondere auch das Erfassen mit dem Überprüfen und/oder das Berechnen der Soll-Fahrtrajektorie, nur durchgeführt wird, falls bei dem Erkennen, ob ein identifiziertes Fahrmanöver ein von dem Fahrer beabsichtigtes Fahrmanöver ist, eindeutig ein beabsichtigtes Fahrmanöver erkannt wurde, das heißt erkannt wurde, dass ein, insbesondere genau ein, identifiziertes Fahrmanöver der Fahrintention des Fahrers entspricht.

Das hat den Vorteil, dass die Sicherheit des Verfahrens erhöht wird, da im Fehlerfall oder bei einer Unsicherheit in der Erkennung des beabsichtigten Fahrmanövers das Fahrerassistenzsystem nicht in die Lenkeingabe eingreift. Hierfür kann insbesondere ein jeweiliger Grenzwert für ein entsprechendes Optimalitätskriterium vorgegeben werden, sodass die Eindeutigkeit der erkannten Fahrintention sichergestellt ist.

In einer weiteren vorteilhaften Ausführungsform ist vorgesehen, dass die berechnete Soll-Fahrtrajektorie auch einen Soll-Geschwindigkeitsverlauf und/oder einen Soll-Beschleunigungsverlauf entlang der Soll-Fahrtrajektorie umfasst und auch eine Beschleunigungseingabe und/oder Geschwindigkeitseingabe, das heißt eine Bremspedalwinkeländerung und/oder eine Gaspedalwinkeländerung des Fahrers erfasst wird und überprüft wird, ob die Beschleunigungseingabe und/oder Geschwindigkeitseingabe des Fahrers verstärkt oder abgeschwächt werden muss, um das Kraftfahrzeug mit dem Soll-Geschwindigkeitsverlauf entlang der Soll-Fahrtrajektorie zu führen, sowie in Abhängigkeit eines Ergebnisses des Überprüfens ein Verstärken oder Abschwächen der Beschleunigungseingabe und/oder Geschwindigkeitseingabe erfolgt.

Das hat den Vorteil, dass nicht nur eine Quer-, sondern auch eine Längssteuerung des Kraftfahrzeugs optimiert wird und so beispielsweise gerade bei einem Überholvorgang oder einem Abbiegevorgang leichter das optimale Verhalten des Kraftfahrzeugs und somit die maximale Sicherheit erreicht werden kann. Insbesondere kann also beispielsweise in Abhängigkeit eines Kurvenradius bei einem Abbiegen eine Geschwindigkeit reduziert und bei einem Überholvorgang eine Geschwindigkeit des Kraftfahrzeugs erhöht werden, um so Sicherheit und Komfort des Fahrers zu erhöhen.

In einer weiteren vorteilhaften Ausführungsform ist vorgesehen, dass die Verhaltensinformation eine Information einer fahrzeuginternen Eingabeeinrichtung, insbesondere eine Lenkwinkelinformation und/oder eine Routeninformation, welche in eine Routenführungseinrichtung des Kraftfahrzeugs eingegeben wurde, und/oder eine Fahrtrichtungsänderungsinformation, welche durch ein Betätigen eines Blinker-Bedienelements in eine Fahrtrichtungsänderungsanzeigeeinrichtung eingegeben wurde, und/oder eine Information einer fahrzeuginternen Erfassungseinrichtung, insbesondere eine Information über eine Blickrichtung des Fahrers, welche über eine fahrzeuginterne Kamera erfasst wurde und/oder eine Geschwindigkeits- oder Beschleunigungsinformation über eine Geschwindigkeit oder Beschleunigung des Kraftfahrzeugs, welche über einen entsprechenden Geschwindigkeits- und/oder Beschleunigungssensor erfasst wurde, umfasst. Die Geschwindigkeits- oder Beschleunigungsinformation kann sich dabei auf eine Längs- und/oder eine Quergeschwindigkeit oder- Beschleunigung beziehen.

Das hat den Vorteil, dass, gerade je mehr Informationen die Verhaltensinformation umfasst, die entsprechende Fahrintention des Fahrers und entsprechend beabsichtigte Fahrmanöver mit einer größeren Genauigkeit vorhergesagt werden können, sodass die Fahrerassistenzvorrichtung den Fahrer besser unterstützen kann.

In einer weiteren vorteilhaften Ausführungsform ist vorgesehen, dass durch eine fahrzeuginterne Sensoreinrichtung ein Fahrzustand des Kraftfahrzeugs erfasst wird, und eine Fahrzustandsinformation die den Zustand des Kraftfahrzeugs repräsentiert, beispielsweise eine Gierrate und/oder eine Geschwindigkeit, an die Recheneinrichtung bereitgestellt wird, und die Recheneinrichtung das eine oder die mehreren Fahrmanöver auch anhand der Fahrzustandsinformation identifiziert. Die Fahrmanöver können also nicht nur anhand der Umgebungsinformation, sondern zusätzlich anhand einer Fahrzustands- oder Fahrzeugzustandsinformation identifiziert werden.

Das hat den Vorteil, dass die in der jeweiligen Fahrsituation möglichen Fahrmanöver genauer und umfassender bestimmt werden können, sodass die Verlässlichkeit und Genauigkeit der Fahrerassistenzvorrichtung erhöht wird.

In einer erfindungsgemäßen Ausführungsform ist vorgesehen, dass das oder die identifizierten Fahrmanöver aus einer Gruppe von Fahrmanövern ausgewählt werden, welche ein Spurhalte-Manöver und/oder ein Überhol-Manöver und/oder ein Spurwechsel-Manöver und/oder optional ein Ausweich-Manöver, insbesondere ein Not-Ausweich-Manöver, und/oder weitere Manöver umfasst.

Gerade die genannten Manöver unterscheiden sich deutlich, sind somit einfach als beabsichtigtes Fahrmanöver zu identifizieren und treten zugleich in einem üblichen Fahrbetrieb des Kraftfahrzeugs häufig auf. Daher ist die Identifizierung eines der genannten Fahrmanöver als möglicherweise beabsichtigtes Fahrmanöver besonders nützlich, um den Fahrer entsprechend zu unterstützen.

In einer erfindungsgemäßen Ausführungsform ist vorgesehen, dass für eine berechnete Soll-Fahrtrajektorie das Erfassen der Lenkeingabe mit dem Überprüfen sowie das Verstärken oder Abschwächen der Lenkeingabe fortlaufend durchgeführt wird.

Das hat den Vorteil, dass das Kraftfahrzeug besonders leicht besonders genau auf der Soll-Trajektorie geführt werden kann.

Die Erfindung betrifft auch eine Fahrerassistenzvorrichtung für ein Kraftfahrzeug, mit einer Umgebungssensoreinrichtung zum Erfassen einer Umgebung des Kraftfahrzeugs und dem Bereitstellen einer Umgebungsinformation, welche die erfasste Umgebung repräsentiert und mit einer fahrzeuginternen Sensoreinrichtung zum Erfassen eines Verhaltens eines Fahrers des Kraftfahrzeugs und zum Bereitstellen einer Verhaltensinformation, welche das Verhalten des Fahrers repräsentiert.

Wichtig ist hier, dass die Fahrerassistenzvorrichtung auch eine Recheneinrichtung aufweist, welche ausgebildet ist, anhand der bereitgestellten Umgebungssituation ein oder mehrere mögliche Fahrmanöver für das Kraftfahrzeug zu identifizieren und anhand der bereitgestellten Verhaltensinformation zu erkennen, ob eines der identifizierten Fahrmanöver ein von dem Fahrer beabsichtigtes Fahrmanöver ist, sowie, falls ein identifiziertes Fahrmanöver ein beabsichtigtes Fahrmanöver ist, eine Soll-Fahrtrajektorie des Kraftfahrzeugs für das beabsichtigte Fahrmanöver zu berechnen und eine von einer Erfassungseinrichtung der Fahrerassistenzvorrichtung erfassten Lenkeingabe des Fahrers dahingehend zu überprüfen, ob die Lenkeingabe verstärkt oder abgeschwächt werden muss, um das Kraftfahrzeug entlang der Soll-Fahrtrajektorie zu führen. Die Fahrerassistenzvorrichtung weist dabei bevorzugt auch eine Lenkeinrichtung auf, welche ausgebildet ist, die Lenkeingabe des Fahrers in Abhängigkeit eines Ergebnisses des Überprüfens der Lenkeingabe zu verstärken oder abzuschwächen.

Vorteilhafte Ausführungsformen und Vorteile der Fahrerassistenzvorrichtung entsprechend dabei Vorteilen und vorteilhaften Ausführungsformen des beschriebenen Verfahrens und umgekehrt.

In einer vorteilhaften Ausführungsform ist dabei vorgesehen, dass die Umgebungssensoreinrichtung eine Kameraeinheit, insbesondere eine Frontkameraeinheit zur frontseitigen Anordnung an dem Kraftfahrzeug, und/oder eine Lidareinheit, eine Light-Detection-and-Ranging-Einheit, also eine Einheit zur optischen Geschwindigkeits- und/oder Entfernungsbestimmung, und/oder eine Radareinheit und/oder eine Ultraschalleinheit aufweist.

Die genannten Einheiten sind hier im Bereich von Kraftfahrzeugen besonders geeignet, um eine Umgebung des Kraftfahrzeugs besonders genau und zuverlässig zu erfassen und eignen sich somit besonders für die Fahrerassistenzvorrichtung beziehungsweise das beschriebene Verfahren. Da viele der genannten Einheiten oft ohnehin in einem Kraftfahrzeug vorhanden sind, können hier auch mit großem synergetischem Effekt ohne zusätzlichen Hardwareaufwand oder mit geringem zusätzlichem Hardwareaufwand die beschriebenen Vorteile erreicht werden.

Die Erfindung betrifft auch ein Kraftfahrzeug mit einer solchen Fahrerassistenzvorrichtung.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand einer schematischen Zeichnung näher erläutert.

In der einzigen Figur ist dabei ein Kraftfahrzeug mit einer beispielhaften Ausführungsform einer Fahrerassistenzvorrichtung in einem Beispielszenario dargestellt, anhand dessen ein Verfahren zum Betreiben der Fahrerassistenzvorrichtung erläutert werden soll.

Das Kraftfahrzeug 1 weist dabei eine Fahrerassistenzvorrichtung 2 mit einer Umgebungssensoreinrichtung 3, welche vorliegend als Lidar ausgeführt ist, zum Erfassen einer Umgebung 4 des Kraftfahrzeugs 1 und zum Bereitstellen einer Umgebungsinformation, welche die erfasste Umgebung 4 repräsentiert, auf. Überdies weist die Fahrerassistenzsystem 2 auch eine fahrzeuginterne Sensoreinrichtung 5, welche vorliegend als eine Kameraeinrichtung ausgeführt ist, zum Erfassen eines Verhaltens eines Fahrers 6 des Kraftfahrzeugs 1 und zum Bereitstellen einer entsprechenden Verhaltensinformation, welche das Verhalten des Fahrers 6 repräsentiert, auf.

Die Fahrerassistenzvorrichtung 2 weist dabei auch eine Recheneinrichtung 7 auf, die ausgebildet ist, anhand der bereitgestellten Umgebungsinformationen eine oder mehrere mögliche Fahrmanöver 8a bis 8c für das Kraftfahrzeug 1 zu identifizieren und anhand der bereitgestellten Verhaltensinformationen zu erkennen, ob eines der identifizierten Fahrmanöver 8a bis 8c ein von dem Fahrer 6 beabsichtigtes Fahrmanöver ist. Die unterschiedlichen Fahrmanöver sind in der vorliegenden Situation beispielhaft mit entsprechenden Pfeilen gekennzeichnet und umfassen hier ein Überhol-Manöver 8a, ein Spurhalte-Manöver 8b und ein Abbiege-Manöver 8c. Falls ein identifiziertes Fahrmanöver 8a bis 8c ein beabsichtigtes Fahrmanöver ist, das heißt einer anhand der Verhaltensinformation erkannten Intention des Fahrers 6 entspricht, ist die Recheneinrichtung 7 ausgebildet, eine Soll-Fahrtrajektorie 9 des Kraftfahrzeugs 1 für das beabsichtige Fahrmanöver 8a bis c, vorliegend das Überhol-Manöver 8a, zu berechnen und einen von einer Erfassungseinrichtung 10 der Fahrerassistenzvorrichtung 2 erfassten Lenkeingabe des Fahrers 6 dahingehend zu überprüfen, ob die Lenkeingabe verstärkt oder abgeschwächt werden muss, um das Kraftfahrzeug 1 entlang der Soll-Fahrtrajektorie 9 zu führen. Entsprechend weist die Fahrerassistenzvorrichtung 2 vorliegend auch eine Lenkeinrichtung 11 auf, welche ausgebildet ist, die Lenkeingabe des Fahrers 6 in Abhängigkeit eines Ergebnisses des Überprüfens zu verstärken oder abzuschwächen.

In der gezeigten Beispielssituation fährt nun das Kraftfahrzeug 1 auf einer Straße 12 hinter einem weiteren Fahrzeug 13 einher. Neben der Möglichkeit eines Überhol-Manövers 8a und der Möglichkeit eines Spurhalte-Manövers 8b mit einem entsprechenden weiter hinter dem anderen Fahrzeug 13 Hinterherfahren ist vorliegend aufgrund einer Abzweigung 14 auch ein Abbiege-Manöver 8c möglich. Dies alles wird von der Recheneinheit 7 anhand der von der Umgebungssensoreinrichtung 3 bereitgestellten Umgebungsinformation erkannt beziehungsweise die entsprechenden möglichen Fahrmanöver 8a bis 8c identifiziert. Bei dem Identifizieren der möglichen Fahrmanöver können auch weitere Informationen, beispielsweise eine Karteninformation, welche in der Fahrerassistenzvorrichtung 2 hinterlegt ist, berücksichtigt werden.

Anhand der von der fahrzeuginternen Sensoreinrichtung 5 bereitgestellten Verhaltensinformation, beispielsweise eines Blicks des Fahrers 6 und bevorzugt auch weiteren Verhaltensinformationen wie beispielsweise einem Gasgeben des Fahrers 6, kann die Recheneinrichtung 7 vorliegend anhand des Gasgebens und auffälligen Beobachtens der Gegenspur der Straße 12 erkennen, dass der Fahrer 6 vor hat, das andere Fahrzeug 13 zu überholen, also ein Überhol-Manöver 8a beabsichtigt. Für dieses als beabsichtigt identifizierte Fahrmanöver 8a berechnet sodann die Recheneinrichtung 7 eine optimale Soll-Fahrtrajektorie 9, die gemäß in der Recheneinrichtung hinterlegten Optimalitätskriterien die beste Wahl für eine Realisierung des Überhol-Manövers 8a entspricht. Diese Soll-Fahrtrajektorie 9 kann selbstverständlich laufend aktualisiert werden. Unternimmt der Fahrer 6 nämlich nichts, nimmt also keine Eingabe, insbesondere keine Lenkeingabe, vor, so wird auch durch die Fahrerassistenzvorrichtung 2 beziehungsweise die Lenkeinrichtung 11 keinen Lenkeingriff vorgenommen.

Erst wenn der Fahrer 6 durch eine Lenkeingabe oder allgemein auch eine sonstige Eingabe das Überhol-Manöver 8a startet und vorliegend damit einen Lenkwinkel des Kraftfahrzeugs 1 verändert oder beispielsweise eine Gaspedalstellung des Kraftfahrzeugs 1 verändert, wird von der Recheneinrichtung 7 hier überprüft, ob die Lenkeingabe verstärkt oder abgeschwächt werden sollte, um das Kraftfahrzeug 1 entlang der Soll-Fahrtrajektorie 9 zu führen. Entsprechend wird der Fahrer 6 nur bei einer eigenen Aktivität, bei dem Vornehmen einer Lenkwinkeländerung, darin unterstützt, das Kraftfahrzeug 1 entlang der für das Überhol-Manöver 8a berechneten idealen Soll-Fahrtrajektorie 9 zu führen.

Das vorgeschlagene Verfahren beziehungsweise die vorgeschlagene Fahrerassistenzvorrichtung 2 ermöglicht hier eine Reihe von vorteilhaften Anwendungen.

Eine vorteilhafte Anwendung ist eine dynamische Anpassung des optimalen Fahrwegs in Abhängigkeit einer sich verändernden Umgebung 4 des Kraftfahrzeugs 1. Beispielsweise kann ein Fahrer 6 eine große Distanz auf einer Landstraße oder einer Autobahn hinter sich zu bringen haben. Die Fahrerassistenzvorrichtung 2 erfasst hier kontinuierlich die Umgebung 4 sowie das Verhalten des Fahrers 6 beziehungsweise einen internen Fahrzustand des Kraftfahrzeugs 1. Wird hier kein beabsichtigtes Fahrmanöver identifiziert, bei welchem ein Spurwechsel vorgesehen ist, unterstützt die Fahrerassistenzvorrichtung 2 den Fahrer 6 bei dem Führen des Kraftfahrzeugs 1 auf der optimalen Soll-Fahrtrajektorie 9 in der eigenen Fahrspur 15. Solange die Umgebungssensoreinrichtung 3 keine Hindernisse auf der Fahrspur 15 entdeckt und andere Fahrzeuge in benachbarten Fahrspuren 16 einen angemessenen Sicherheitsabstand halten, verläuft die Soll-Fahrtrajektorie in der Mitte der Fahrspur 15. Die vorgeschlagene Fahrerassistenzvorrichtung 2 unterstützt den Fahrer 6 nun aktiv darin, das Kraftfahrzeug 1 auf der Soll-Fahrtrajektorie 9 in der Mitte der Fahrspur 15 zu halten. Kleine Abweichungen in dem Lenkverhalten des Fahrers 6, wie sie beispielsweise auftreten können, wenn dieser Niesen muss oder kurzzeitig einen Blick auf ein Navigationssystem wirft, werden so durch die Fahrerassistenzvorrichtung 2 beziehungsweise die Lenkeinrichtung 11 kompensiert und korrigiert.

Falls die Umgebungssensoreinrichtung 3 ein Hindernis auf der Fahrspur 15 detektiert, beispielsweise einen verlorenen Reifen, oder falls durch die Umgebungssensoreinrichtung 3 ein anderer Verkehrsteilnehmer erfasst wird, welcher zum Beispiel einen empfohlenen Mindestsicherheitsabstand nicht einhält, wird die Soll-Fahrtrajektorie 9 anhand der hinterlegten Optimalitätskriterien angepasst. Dabei wird in diesem Fall nicht länger die Mitte der Fahrspur 15 als beste Wahl für den Fahrweg des Kraftfahrzeugs 1 gewählt werden, sondern vielmehr für eine Risikominimierung für alle Verkehrsteilnehmer ein Sicherheitsabstand zu etwaigen Hindernissen und/oder anderen Verkehrsteilnehmern eingestellt werden. Entsprechend wird die Fahrerassistenzvorrichtung 2 den Fahrer 6 bei dem Führen des Kraftfahrzeugs 1 entlang der angepassten Soll-Fahrtrajektorie 9 unterstützen.

Eine weitere vorteilhafte Anwendung ist das unterstützte Lenken des Kraftfahrzeugs 1 in einer ungewöhnlichen Verkehrssituation. Hat beispielsweise der Fahrer einen Straßenabschnitt zu passieren, an welchem Bauarbeiten stattfinden und entsprechend die verfügbaren Fahrspuren eine verringerte Breite aufweisen und möglicherweise der Verkehr über mehrere kurvige Straßenabschnitte an der Baustelle vorbeigeleitet werden, bewegen sich auch andere Verkehrsteilnehmer im Allgemeinen unsicher und kommen dabei oft dem eigenen Kraftfahrzeug 2 oder der eigenen Fahrspur 15 näher als gewünscht. Auch in einer solchen Situation kann der Fahrer 6 entsprechend entscheiden, eine Fahrspur zu wechseln. Dies wird vorliegend anhand der Verhaltensinformation erkannt, wobei die Fahrerassistenzvorrichtung 2 zur Unterstützung des Fahrers 6 nun für die verengten Fahrspuren und die in der Umgebung 4 detektierten weiteren Fahrzeuge 13 sowie der entsprechenden Geometrie des Verlaufs der Fahrspur eine angepasste Soll-Fahrtrajektorie 9 berechnet. Da das Fahrerassistenzsystem 2 hier beispielsweise fortlaufend jeweilige rechte und linke Grenzen der Straße 12 und der Fahrspuren 15, 16 überwacht und erfasst, kann auch der Fahrer 6 so fortlaufend darin unterstützt werden, das Kraftfahrzeug 1 stets auf einer optimierten, den jeweiligen Umständen angepassten Fahr-Trajektorie 9 zu führen.

Eine andere vorteilhafte Anwendung betrifft die Unterstützung in innerstädtischen Kreuzungen. Gerade in innerstädtischen Kreuzungen und Abzweigungen mit mehreren Fahrspuren 15, 16 haben viele Fahrer 6 Schwierigkeiten, den jeweils besten Fahrweg von einer Seite der Kreuzung zur anderen Seite der Kreuzung zu finden, sodass hier oftmals ein Abstand zwischen unterschiedlichen Fahrzeugen sehr gering wird und sich gefährliche Situationen ergeben. Die vorgeschlagene Fahrerassistenzvorrichtung 2 optimiert hier den Bewegungsweg und unterstützt den Fahrer 6 darin, den jeweils besten Weg über die Kreuzung zu finden, auch wenn beispielsweise im Sichtfeld des Fahrers 6 gerade keine Straßenmarkierung vorhanden ist. Die Fahrerassistenzvorrichtung 2 kann dabei bevorzugt auch auf eine in der Recheneinrichtung 7 hinterlegte Karteninformation zurückgreifen.

## Patentansprüche

1. Verfahren zum Betreiben einer Fahrerassistenzvorrichtung (2) eines Kraftfahrzeugs (1), mit den Verfahrensschritten:
a) Erfassen einer Umgebung (4) des Kraftfahrzeugs (1) durch eine Umgebungssensoreinrichtung (3) der Fahrerassistenzvorrichtung (2);
b) Bereitstellen einer Umgebungsinformation, welche die erfasste Umgebung (4) repräsentiert, an eine Recheneinrichtung (7) der Fahrerassistenzvorrichtung (2);
c) Identifizieren eines oder mehrerer möglicher Fahrmanöver (8a, 8b, 8c) für das Kraftfahrzeug (1) anhand der Umgebungsinformation durch die Recheneinrichtung (7), wobei das oder die identifizierten Fahrmanöver (8a, 8b, 8c) aus einer Gruppe von Fahrmanövern ausgewählt werden, welche ein Spurhalte-Manöver (8b) und/oder ein Überhol-Manöver (8a) und/oder ein Spurwechsel-Manöver und/oder ein Ausweich-Manöver umfasst;
d) Erfassen eines Verhaltens eines Fahrers (6) des Kraftfahrzeugs (1) durch eine fahrzeuginterne Sensoreinrichtung (5);
e) Bereitstellen einer Verhaltensinformation, welche das Verhalten des Fahrers (6) repräsentiert, an die Recheneinrichtung (7);
f) Erkennen, ob eines der identifizierten Fahrmanöver (8a, 8b, 8c) ein von dem Fahrer (6) beabsichtigtes Fahrmanöver (8a) ist, anhand der bereitgestellten Verhaltensinformation durch die Recheneinrichtung (7);
**dadurch gekennzeichnet, dass**
falls ein identifiziertes Fahrmanöver (8a, 8b, 8c) ein beabsichtigtes Fahrmanöver (8a) ist :
g) Berechnen einer Soll-Fahrtrajektorie (9) des Kraftfahrzeugs (1) für das beabsichtigte Fahrmanöver (8a) durch die Recheneinrichtung (7);
h) Erfassen einer Lenkeingabe des Fahrers (6) und Überprüfen, ob die Lenkeingabe verstärkt oder abgeschwächt werden muss, um das Kraftfahrzeug (1) entlang der Soll-Fahrtrajektorie (9) zu führen;
i) Verstärken oder Abschwächen der Lenkeingabe in Abhängigkeit eines Ergebnisses des Überprüfens,
wobei für eine berechnete Soll-Fahrtrajektorie (9) das Erfassen gemäß Verfahrensschritt h) und das Verstärken oder Abschwächen gemäß Verfahrensschritt i) fortlaufend durchgeführt wird.

2. Verfahren nach Anspruch 1,
**dadurch gekennzeichnet, dass**
das Verstärken oder Abschwächen gemäß Verfahrensschritt i), insbesondere auch das Erfassen mit dem Überprüfen gemäß Verfahrensschritt h) und/oder das Berechnen gemäß Verfahrensschritt g), nur durchgeführt wird, falls bei dem Erkennen gemäß Verfahrensschritt f) anhand der Verhaltensinformation ein beabsichtigtes Fahrmanöver (8a, 8b, 8c) erkannt wurde.

3. Verfahren nach einem der vorhergehenden Ansprüche,
**dadurch gekennzeichnet, dass**
die berechnete Soll-Fahrtrajektorie (9) auch einen Soll-Geschwindigkeitsverlauf entlang der Soll-Fahrtrajektorie (9) umfasst und auch eine Beschleunigungseingabe des Fahrers (6) erfasst wird und überprüft wird, ob die Beschleunigungseingabe verstärkt oder abgeschwächt werden muss, um das Kraftfahrzeug (1) mit dem Soll-Geschwindigkeitsverlauf entlang der Soll-Fahrtrajektorie (9) zu führen sowie in Abhängigkeit eines Ergebnisses des Überprüfens ein Verstärken oder Abschwächen der Beschleunigungseingabe erfolgt.

4. Verfahren nach einem der vorhergehenden Ansprüche,
**dadurch gekennzeichnet, dass**
die Verhaltensinformation eine Information einer fahrzeuginternen Eingabeeinrichtung, insbesondere eine Lenkwinkelinformation und/oder eine Routeninformation und/oder eine Fahrtrichtungsänderungsinformation, und/oder eine Information einer fahrzeuginternen Erfassungseinrichtung, insbesondere eine Information über eine Blickrichtung des Fahrers (6) und/oder eine Geschwindigkeitsinformation, umfasst.

5. Verfahren nach einem der vorhergehenden Ansprüche,
**dadurch gekennzeichnet, dass**
durch eine fahrzeuginterne Sensoreinrichtung (5) ein Fahrzustand des Kraftfahrzeugs (1) erfasst wird, und eine Fahrzustandsinformation, die den Zustand des Kraftfahrzeugs (1) repräsentiert, an die Recheneinrichtung (7) bereitgestellt wird, und die Recheneinrichtung (7) das eine oder die mehreren Fahrmanöver (8a, 8b, 8c) auch anhand der Fahrzustandsinformation identifiziert.

6. Verfahren nach einem der vorhergehenden Ansprüche,
**dadurch gekennzeichnet, dass**
das Ausweich-Manöver ein Not-Ausweich-Manöver umfasst.

7. Verfahren nach einem der vorhergehenden Ansprüche,
**dadurch gekennzeichnet, dass**
die Fahrerassistenzvorrichtung eine Spurhalteassistenzvorrichtung ist.

8. Fahrerassistenzvorrichtung (2) für ein Kraftfahrzeug (1), mit:
- einer Umgebungssensoreinrichtung (3) zum Erfassen einer Umgebung (4) des Kraftfahrzeugs (1) und zum Bereitstellen einer Umgebungsinformation, welche die erfasste Umgebung (4) repräsentiert;
- einer fahrzeuginternen Sensoreinrichtung (5) zum Erfassen eines Verhaltens eines Fahrers (6) des Kraftfahrzeugs (1) und zum Bereitstellen einer Verhaltensinformation, welche das Verhalten des Fahrers (6) repräsentiert; **gekennzeichnet durch**
- eine Recheneinrichtung (7), welche ausgebildet ist, anhand der bereitgestellten Umgebungsinformation ein oder mehrere mögliche Fahrmanöver (8a, 8b, 8c) für das Kraftfahrzeug (1) zu identifizieren, wobei das oder die identifizierten Fahrmanöver (8a, 8b, 8c) aus einer Gruppe von Fahrmanövern ausgewählt werden, welche ein Spurhalte-Manöver (8b) und/oder ein Überhol-Manöver (8a) und/oder ein Spurwechsel-Manöver und/oder ein Ausweich-Manöver umfasst, und wobei die Recheneinrichtung weiterhin ausgebildet ist anhand der bereitgestellten Verhaltensinformation zu erkennen, ob eines der identifizierten Fahrmanöver (8a, 8b, 8c) ein von dem Fahrer (6) beabsichtigtes Fahrmanöver (8a) ist, **dadurch gekennzeichnet, dass** falls ein identifiziertes Fahrmanöver (8a, 8b, 8c) ein beabsichtigtes Fahrmanöver (8a) ist, eine Soll-Fahrtrajektorie (9) des Kraftfahrzeugs (1) für das beabsichtigte Fahrmanöver (8a) berechnet und eine von einer Erfassungseinrichtung (10) der Fahrerassistenzvorrichtung (2) erfassten Lenkeingabe des Fahrers (6) dahingehend überprüft wird, ob die Lenkeingabe verstärkt oder abgeschwächt werden muss, um das Kraftfahrzeug (1) entlang der Soll-Fahrtrajektorie (9) zu führen; und
- eine Lenkeinrichtung (11), welche ausgebildet ist, die Lenkeingabe des Fahrers (6) in Abhängigkeit eines Ergebnisses des Überprüfens zu verstärken oder abzuschwächen,
wobei für eine berechnete Soll-Fahrtrajektorie (9) das Erfassen von der Erfassungseinrichtung (10) sowie das Überprüfen und das Verstärken oder Abschwächen durch die Lenkeinrichtung (11) fortlaufend durchgeführt wird.

9. Fahrerassistenzvorrichtung (2) nach Anspruch 8,
**dadurch gekennzeichnet, dass**
die Umgebungssensoreinrichtung (3) eine Kamera-Einheit, insbesondere eine Front-Kamera-Einheit, und/oder eine Lidar-Einheit und/oder eine Radar-Einheit und/oder eine Ultraschall-Einheit aufweist.

10. Kraftfahrzeug (1) mit einer Fahrerassistenzvorrichtung (2) nach Anspruch 8 oder 9.

## Claims

1. Method for operating a driver assistance device (2) of a motor vehicle (1), having the method steps:
a) sensing a surrounding area (4) of the motor vehicle (1) by means of a surroundings sensor apparatus (3) of the driver assistance device (2);
b) providing surroundings information which represents the sensed surroundings (4), to a computer apparatus (7) of the driver assistance device (2);
c) identifying one or more possible driving manoeuvres (8a, 8b, 8c) for the motor vehicle (1) on the basis of the surroundings information by means of the computer apparatus (7), wherein the identified driving manoeuvre or manoeuvres (8a, 8b, 8c) is/are selected from a group of driving manoeuvres which comprises a lane-given manoeuvre (8b) and/or an overtaking manoeuvre (8a) and/or a lane-changing manoeuvre and/or an avoidance manoeuvre;
d) sensing a behaviour of a driver (6) of the motor vehicle (1) by means of a vehicle-internal sensor apparatus (5);
e) providing behaviour information which represents the behaviour of the driver (6), to the computer apparatus (7);
f) detecting whether one of the identified driving manoeuvres (8a, 8b, 8c) is a driving manoeuvre (8a) which is intended by the driver (6), on the basis of the provided behaviour information, by means of the computer apparatus (7);
**characterized in that**
if an identified driving manoeuvre (8a, 8b, 8c) is an intended driving manoeuvre (8a):
g) calculating a setpoint trajectory (9) of the motor vehicle (1) for the intended driving manoeuvre (8a) by means of the computer apparatus (7);
h) registering a steering input of the driver (6) and checking whether the steering input has to be boosted or attenuated in order to guide the motor vehicle (1) along the setpoint trajectory (9);
i) boosting or attenuating the steering input in accordance with a result of the checking process, wherein for a calculated setpoint trajectory (9) the registration according to method step h) and the boosting or attenuation according to method step i) are carried out continuously.

2. Method according to Claim 1,
**characterized in that**
the boosting or attenuation according to method step i), in particular also the registration with the checking according to method step h) and/or the calculation according to method step g), is carried out only if during the detection according to method step f) an intended driving manoeuvre (8a, 8b, 8c) has been detected on the basis of the behaviour information.

3. Method according to one of the preceding claims,
**characterized in that**
the calculated setpoint trajectory (9) also comprises a setpoint speed profile along the setpoint trajectory (9), and an acceleration input of the driver (6) is also registered and it is checked whether the acceleration input has to be boosted or attenuated in order to guide the motor vehicle (1) with the setpoint speed profile along the setpoint trajectory (9), and boosting or attenuation of the acceleration input is carried out in accordance with a result of the checking.

4. Method according to one of the preceding claims,
**characterized in that**
the behaviour information comprises information of a vehicle-internal input apparatus, in particular steering angle information and/or route information and/or travel-direction change information and/or information of a vehicle-internal sensing apparatus, in particular information about a viewing direction of the driver (6) and/or speed information.

5. Method according to one of the preceding claims,
**characterized in that**
a driving state of the motor vehicle (1) is sensed by a vehicle-internal sensor apparatus (5), and driving state information which represents the state of the motor vehicle (1) is provided to the computing apparatus (7), and the computing apparatus (7) identifies the one or more driving manoeuvres (8a, 8b, 8c) also on the basis of the driving state information.

6. Method according to one of the preceding claims,
**characterized in that**
the avoidance manoeuvre comprises an emergency avoidance manoeuvre.

7. Method according to one of the preceding claims,
**characterized in that**
the driver assistance device is a lane-keeping assistance device.

8. Driver assistance device (2) for a motor vehicle (1), having:
- a surroundings sensor apparatus (3) for sensing surroundings (4) of the motor vehicle (1) and for providing surroundings information which represents the sensed surroundings (4);
- a vehicle-internal sensor apparatus (5) for sensing a behaviour of a driver (6) of the motor vehicle (1) and for providing behaviour information which represents the behaviour of the driver (6); **characterized by**
- a computer apparatus (7) which is designed to identify, on the basis of the provided surroundings information, one or more possible driving manoeuvres (8a, 8b, 8c) for the motor vehicle (1), wherein the identified driving manoeuvre or manoeuvres (8a, 8b, 8c) is/are selected from the group comprising manoeuvres which comprises a lane-keeping manoeuvre (8b) and/or an overtaking manoeuvre (8a) and/or a lane-changing manoeuvre and/or an avoidance manoeuvre, and wherein the computer apparatus is also designed to detect, on the basis of the provided behaviour information, whether one of the identified driving manoeuvres (8a, 8b, 8c) is a driving manoeuvre (8a) which is intended by the driver (6), **characterized in that** if
an identified driving manoeuvre (8a, 8b, 8c) is an intended driving manoeuvre (8a), a setpoint trajectory (9) of the motor vehicle (1) is calculated for the intended driving manoeuvre (8a) and steering input, registered by a registration apparatus (10) of the driver assistance apparatus (2), of the driver (6) is checked to determine whether the steering input has to be boosted or attenuated in order to guide the motor vehicle (1) along the setpoint trajectory (9); and
- a steering apparatus (11) which is designed to boost or attenuate the steering input of the driver (6) in accordance with a result of the checking process,
wherein for a calculated setpoint trajectory (9) the registration by the registration device (10) and the checking and the boosting or attenuation by the steering apparatus (11) are carried out continuously.

9. Driver assistance device (2) according to Claim 8, **characterized in that**
the surroundings sensor apparatus (3) has a camera unit, in particular a front camera unit and/or a Lidar unit and/or a radar unit and/or an ultrasonic unit.

10. Motor vehicle (1) having a driver assistance device (2) according to Claim 8 or 9.

## Revendications

1. Procédé pour faire fonctionner un arrangement d'assistance au conducteur (2) d'un véhicule automobile (1), comprenant les étapes suivantes :
a) détection d'un environnement (4) du véhicule automobile (1) par un dispositif de détection d'environnement (3) de l'arrangement d'assistance au conducteur (2) ;
b) fourniture d'une information d'environnement, laquelle représente l'environnement (4) détecté, à un dispositif de calcul (7) de l'arrangement d'assistance au conducteur (2) ;
c) identification d'une ou de plusieurs manœuvres de conduite (8a, 8b, 8c) possibles pour le véhicule automobile (1) à l'aide de l'information d'environnement par le dispositif de calcul (7), la ou les manœuvres de conduite (8a, 8b, 8c) identifiées étant sélectionnées dans un groupe de manœuvres de conduite qui comprend une manœuvre de maintien de trajectoire (8b) et/ou une manœuvre de dépassement (8a) et/ou une manœuvre de changement de voie et/ou une manœuvre d'évitement ;
d) détection d'un comportement d'un conducteur (6) du véhicule automobile (1) par un dispositif détecteur (5) interne au véhicule ;
e) fourniture, au dispositif de calcul (7), d'une information de comportement qui représente le comportement du conducteur (6) ;
f) reconnaissance, par le dispositif de calcul (7), à l'aide de l'information de comportement fournie, si l'une des manœuvres de conduite (8a, 8b, 8c) identifiées est une manœuvre de conduite (8a) prévue par le conducteur (6) ;
**caractérisé en ce que**
dans le cas où une manœuvre de conduite (8a, 8b, 8c) identifiée est une manœuvre de conduite (8a) prévue :
g) calcul d'une trajectoire de conduite voulue (9) du véhicule automobile (1) pour la manœuvre de conduite (8a) prévue par le dispositif de calcul (7) ;
h) détection d'une intervention de braquage du conducteur (6) et vérification si l'intervention de braquage doit être amplifiée ou affaiblie en vue de guider le véhicule automobile (1) le long de la trajectoire de conduite voulue (9) ;
i) amplification ou affaiblissement de l'intervention de braquage en fonction d'un résultat de la vérification, la détection selon l'étape h) et l'amplification ou l'affaiblissement selon l'étape i) étant effectués en continu pour une trajectoire de conduite voulue (9) calculée.

2. Procédé selon la revendication 1, **caractérisé en ce que** l'amplification ou l'affaiblissement selon l'étape i), notamment aussi la détection avec la vérification selon l'étape h) et/ou le calcul selon l'étape g) ne sont effectués que si dans le cas de la reconnaissance selon l'étape f), une manœuvre de conduite (8a, 8b, 8c) prévue a été reconnue à l'aide de l'information de comportement.

3. Procédé selon l'une des revendications précédentes, **caractérisé en ce que** la trajectoire de conduite voulue (9) calculée comprend également une courbe de vitesse de consigne le long de la trajectoire de conduite voulue (9) et une intervention d'accélération du conducteur (6) est également détectée et un contrôle est effectué afin de vérifier si l'intervention d'accélération doit être amplifiée ou affaiblie en vue de guider le véhicule automobile (1) avec la courbe de vitesse de consigne le long de la trajectoire de conduite voulue (9), et une amplification ou un affaiblissement de l'intervention d'accélération est effectué(e) en fonction d'un résultat de la vérification.

4. Procédé selon l'une des revendications précédentes, **caractérisé en ce que** l'information de comportement comporte une information d'un dispositif de saisie interne au véhicule, notamment une information d'angle de braquage et/ou une information d'itinéraire et/ou une information de changement de direction de conduite et/ou une information d'un dispositif de détection interne au véhicule, notamment une information à propos d'une direction du regard du conducteur (6) et/ou une information de vitesse.

5. Procédé selon l'une des revendications précédentes, **caractérisé en ce qu'**un état de conduite du véhicule automobile (1) est détecté par un dispositif détecteur (5) interne au véhicule et une information d'état de conduite, qui représente l'état du véhicule automobile (1), est fournie au dispositif de calcul (7) et le dispositif de calcul (7) identifie également la ou les manœuvres de conduite (8a, 8b, 8c) à l'aide de l'information d'état de conduite.

6. Procédé selon l'une des revendications précédentes, **caractérisé en ce que** la manœuvre d'évitement comprend une manœuvre d'évitement d'urgence.

7. Procédé selon l'une des revendications précédentes, **caractérisé en ce que** l'arrangement d'assistance au conducteur est un arrangement d'assistance au maintien de la trajectoire.

8. Arrangement d'assistance au conducteur (2) pour un véhicule automobile (1), comprenant :
- un dispositif de détection d'environnement (3) destiné à détecter un environnement (4) du véhicule automobile (1) et à fournir une information d'environnement, laquelle représente l'environnement (4) détecté ;
- un dispositif détecteur (5) interne au véhicule destiné à détecter un comportement d'un conducteur (6) du véhicule automobile (1) et à fournir une information de comportement qui représente le comportement du conducteur (6) ;
**caractérisé par**
- un dispositif de calcul (7) qui est configuré pour, à l'aide de l'information d'environnement fournie, identifier une ou plusieurs manœuvres de conduite (8a, 8b, 8c) possibles pour le véhicule automobile (1), la ou les manœuvres de conduite (8a, 8b, 8c) identifiées étant sélectionnées dans un groupe de manœuvres de conduite qui comprend une manœuvre de maintien de trajectoire (8b) et/ou une manœuvre de dépassement (8a) et/ou une manœuvre de changement de voie et/ou une manœuvre d'évitement, et le dispositif de calcul (7) étant en outre configuré pour reconnaître, à l'aide de l'information de comportement fournie, si l'une des manœuvres de conduite (8a, 8b, 8c) identifiées est une manœuvre de conduite (8a) prévue par le conducteur (6) ;
**caractérisé en ce que**
dans le cas où une manœuvre de conduite (8a, 8b, 8c) identifiée est une manœuvre de conduite (8a) prévue, une trajectoire de conduite voulue (9) du véhicule automobile (1) pour la manœuvre de conduite (8a) prévue est calculée et une intervention de braquage du conducteur (6) détectée par un dispositif de détection (10) de l'arrangement d'assistance au conducteur (2) est soumis à contrôle afin de vérifier si l'intervention de braquage doit être amplifiée ou affaiblie en vue de guider le véhicule automobile (1) le long de la trajectoire de conduite voulue (9) ; et
- un dispositif de braquage (11) qui est configuré pour amplifier ou affaiblir l'intervention de braquage du conducteur (6) en fonction d'un résultat de la vérification,
la détection par le dispositif de détection (10) ainsi que la vérification et l'amplification ou l'affaiblissement par le dispositif de braquage (11) étant effectués en continu pour une trajectoire de conduite voulue (9) calculée.

9. Arrangement d'assistance au conducteur (2) selon la revendication 8, **caractérisé en ce que** le dispositif de détection d'environnement (3) possède une unité de caméra, notamment une unité de caméra avant, et/ou une unité de lidar et/ou une unité de radar et/ou une unité à ultrasons.

10. Véhicule automobile (1) équipé d'un arrangement d'assistance au conducteur (2) selon la revendication 8 ou 9.
